# EUROPEAN PATENT APPLICATION

(11) **EP 4 253 017 A1**
(43) Date of publication of application: **04.10.2023**
(21) Application number: 22165975.8
(22) Date of filing: 31.03.2022
(51) Int. Cl.: B29C 73/16

(54) **APPARATUS AND SYSTEM FOR CONVEYING LIQUID SEALANT INTO AN INFLATABLE OBJECT**

(71) Applicant: Sumitomo Rubber Industries, Ltd., Kobe-shi, Hyogo-ken 651-0072 (JP)
(72) Inventor: MALDONADO BELLIDO, Carlos, 63456 Hanau (DE); GAWLITT, Daniel, 63456 Hanau (DE); KOEGLER, Michael M., 63456 Hanau (DE); SCHILDGER, Daniel, 63456 Hanau (DE)
(74) Representative: Manitz Finsterwald Patent- und Rechtsanwaltspartnerschaft mbB

(57) **Abstract**

Apparatus for conveying fluidical sealant into an inflatable object, in particular a pneumatic tire comprising (a) a sealant bottle (1) being gas pressure resistant and having a neck (5) provided with an outlet opening (5b) and an outer thread (6) and (b) an extraction unit (3) having a receiving socket (8) being provided with an inner thread (9) of reciprocal shape as compared to the outer thread of bottle neck (5), a gas inlet opening (20) and an outlet opening (21) for the liquid sealant, the inlet opening (20) and the outlet opening (21) being in fluid connection with the receiving socket, where bottle neck (5) of the sealant bottle (1) comprises a ring-shaped front face (22) surrounding opening (5a) and wherein receiving socket (8) of extraction unit (3) comprises a bottom (19) covering the ring-shaped front face (22) of bottle neck (5) in the state where bottle neck (5) is screwed into the receiving socket (8), wherein the bottom (19) covering the ring-shaped front face (22) of bottler neck (5) and/or neck (5) of sealant bottle (1) are made of a material which guarantees leakage-free sealing of neck (5) of sealant bottle (1) against receiving socket (8) of extraction unit (3) when the neck (5) of sealant bottle (1) is screwed into the receiving socket (8) of extraction unit (3).

## Description

The present invention relates to an apparatus for conveying fluidical sealant into an inflatable object, in particular a pneumatic tire, comprising (a) a sealant bottle being gas pressure resistant and having a neck provided with an outlet opening and an outer thread and (b) an extraction unit having a receiving socket being provided with an inner thread of reciprocal shape as compared to the outer thread of the bottle neck, a gas inlet opening and an outlet opening for the liquid sealant, the inlet opening and the outlet opening being in fluid connection with the receiving socket, where the neck of the sealant bottle comprises a ring-shaped front face surrounding the opening and wherein the receiving socket of the extraction unit comprises a bottom covering the ring-shaped front face of the bottle neck in the state where the bottle neck is screwed into the receiving socket. The invention further relates to a system comprising such an apparatus and a gas pressure source arranged in a housing, in particular an electrically driven air pump.

Such apparatus and such system are generally known, for example as flat-tire repair kits, and are carried in a motor vehicle as a replacement for a spare wheel. In many such apparatuses and systems the bottle is arranged in an upside down orientation with its outlet opening facing downwards. The sealant contained in the bottle can thus be expelled by simply introducing pressurized gas into the bottle by the extraction unit without the need of a riser tube which would be required if the bottle is arranged in an opposite orientation with its outlet opening facing upwards.

In order to use the bottle in such upside down orientation either the outlet opening of the bottle needs to be sealed, for example by a sealing foil, or by the extraction unit which then must be screwed onto the bottle before turning it upside down and which must be equipped with respective closing elements like a cap which can be blown off into the inside of the bottle by the gas pressure applied to the apparatus for conveying the sealant into the object.

For further sealing the apparatus against leakage of the sealant, known apparatus comprise a ring of sealing material arranged between the neck of the sealant bottle and the socket of the extraction unit. Further sealing elements are required between the gas inlet of the extraction unit and the gas pressure source and between the outlet of the extraction unit and a conduit for fluidically connecting the extraction unit and the inflatable object.

It is an object of the present invention to provide an apparatus and system of the aforementioned kind requiring less parts than known apparatuses and systems.

This object is achieved by an apparatus of the aforementioned kind being characterized in that the bottom covering the ring-shaped front face of the bottle neck and/or the neck of the sealant bottle are made of a material which guarantees leakage-free sealing of the neck of the sealant bottle against the receiving socket of the extraction unit when the neck of the sealant bottle is screwed into the receiving socket of the extraction unit.

The object is further achieved by a system of the aforementioned kind having the features of claim 13.

Since the bottom of the receiving socket of the extraction unit which covers the front face of the neck of the sealant bottle and/or the front face of the neck are made of a material which guarantees a leakage-free sealing between the neck of the sealant bottle and the receiving socket of the extraction unit, when these elements are screwed together, no separate sealing is required. The inventive apparatus and system therefore comprise less parts than known apparatuses and systems.

As material for the leakage-free sealing preferably a thermoplastic elastomer is used. Such material can provide sufficient sealing and is rather inexpensive.

It is further preferred if the thermoplastic elastomer has a Shore D hardness of about 60, in particular 60 ± 10, preferably 60 ± 5. Such hardness sufficiently guarantees a leakage-free sealing.

According to a further embodiment of the invention, the complete extraction unit is made of a material guaranteeing a leakage-free sealing. Manufacturing of the extraction unit is thereby made easy. Further, since accordingly also the gas inlet of the extraction unit has sealing properties, O-rings which are normally used can be dispensed with. Further, also the outlet of the extraction unit thereby has sealing properties which can avoid the need of further sealing elements. The number of parts of the inventive apparatus and system can thus be further reduced.

The sealant bottle is preferably made of plastic, in particular high density polyethylene. Such material is strong enough to withstand the pressure required for expelling the sealant from the sealant bottle.

The gas inlet of the extraction unit is preferably provided by an inlet plug comprising a conduit which is in fluid connection with the receiving socket of the extraction unit. The inlet plug serves to connect the extraction unit fluidically to the gas pressure source, in particular an outlet conduit of the gas pressure source. If the complete extraction unit is made of a material which guarantees a leakage-free sealing, no additional sealing elements are needed between the inlet plug of the extraction unit and the outlet conduit of the gas pressure source. By this, further parts can be dispensed with.

According to a further embodiment of the invention the opening of the conduit provided in the inlet plug opening into the receiving socket of the extraction unit is closed up by a foil which can be broken or released by the pressure of the gas provided by the gas pressure source. This sealing foil prevents sealant from flowing into said conduit while no gas pressure is applied yet.

According to a further embodiment of the invention the outlet opening of the extraction unit is provided in an outlet plug having a conduit being in fluidical connection with the receiving socket of the extraction unit. The outlet plug can be easily used to connect the extraction unit to a conduit, in particular a hose, for conveying the sealant from the bottle into an object to be sealed.

According to a further embodiment of the invention the inlet plug of the extraction unit is provided on its outside with at least one circumferential rib. Said rib serves as a sealing element, in particular if the complete extraction unit is made of a material providing a leakage-free sealing.

According to another embodiment of the invention the outlet plug of the extraction unit is provided with coupling elements for coupling the extraction unit to a conduit, in particular a hose, for conveying the sealant into an object to be sealed.

According to a further embodiment of the invention the outlet opening of the sealant bottle, before having been screwed into the receiving socket of the extraction unit, is provided with a breakable or releasable sealing foil. The contents of the sealant bottle is thus protected, and the sealant bottle can be turned upside down for it to be screwed into the receiving socket of the extraction unit without sealant flowing out of the sealant bottle.

Preferably, the extraction unit is provided with means for severing the sealing foil of the sealant bottle, in particular a cutting edge arranged in the receiving socket of the extraction unit. By screwing the sealant bottle into the receiving socket of the extraction unit the sealing foil of the sealant bottle is cut open which allows pressurized gas to enter the sealant bottle and expel the sealant contained therein.

The invention also relates to a system for conveying fluidical sealant into an inflatable object, in particular pneumatic tire, comprising an apparatus as outlined above and a gas pressure source arranged in a housing, in particular an electrically driven air pump. According to the invention the extraction unit of the apparatus is arranged at an outer side of the housing or can be connected to an outer side of the housing, in particular such that the sealant bottle connected to the extraction unit is held in an upside down position with its outlet opening facing downwards. This orientation of the sealant bottle provides for an easy emptying of the bottle. In addition, the sealant bottle can be easily coupled to the housing of the gas pressure source which housing serves as a stand for the sealant bottle.

According to a further embodiment of the invention the housing comprises a receiving section for receiving the extraction unit, into which receiving section opens an outlet conduit of the gas pressure source and into which receiving section the extraction unit is insertable, such that the gas inlet opening of the extraction unit is connectable to the outlet conduit of the gas pressure source, in particular directly plugable into it. By this arrangement the mechanical connection between the sealant bottle and the housing of the gas pressure source can be performed at the same time as the fluidical connection between the gas pressure source and the sealant bottle.

According to a further embodiment of the invention the receiving section on the one hand and the extraction unit on the other hand have reciprocal parts of a kind of bayonet coupling, in particular on the one side a rib and on the other side a reciprocal groove. Such elements provide for a stable connection between the extraction unit and the housing of the gas pressure source.

According to a still further embodiment of the invention the extraction unit has a handle for manually turning the extraction unit relative to the receiving section of the housing and for making the bayonet-like coupling. The coupling is thereby facilitated.

According to another embodiment of the invention the receiving section of the housing comprises a platform on which the extraction unit is placeable and slideably turnable to perform the bayonet-like coupling. A correct positioning of the extraction unit for performing the bayonet coupling is thereby facilitated.

According to still another embodiment of the invention the receiving section is arranged in an edge area, in particular a corner area, of the housing of the gas pressure source. In such an area the coupling between the extraction unit and the housing can be performed easily.

According to yet another embodiment of the invention the housing of the gas pressure source comprises a receiving compartment, which is in particular accessible from outside, for storing the extraction unit when not in use. The extraction unit can thereby be stored safely in a place different from the coupling section of the housing which makes it possible to couple an air hose to the outlet conduit of the gas pressure source for inflating the inflatable object without sealing it.

According to another embodiment of the invention a non-return valve is provided in the housing of the gas pressure source, which valve is arranged in the outlet conduit of the gas pressure source and closes the outlet conduit against an inflow of sealant when the sealant bottle is connected to the gas pressure source. A blocking of the outlet conduit of the gas pressure source by the sealant can thus be prevented.

All embodiments of the invention mentioned before can be combined with each other one by one or more than two embodiments of the invention with each other.

One specific embodiment of the invention is shown in the drawings and will be described hereafter. In the drawings it is schematically shown in
- Fig. 1: a perspective view of a system according to the invention in a state of use,
- Fig. 2: the system of Fig. 1 in a sideview before coupling the sealant bottle to the housing of the gas pressure source,
- Fig. 3: a vertical section of the system of Fig. 1 in a state of use before applying gas pressure to the sealant bottle,
- Fig. 4: the depiction of Fig. 3 after gas pressure has been applied to the sealant bottle,
- Fig. 5: a perspective view of a sealant bottle before use in an upside down arrangement,
- Fig. 6: a perspective view of an extraction unit according to the invention,
- Fig. 7: the depiction of Fig. 6 with a sealing foil covering the gas inlet conduit,
- Fig. 8a to c: three steps for connecting an extraction unit with fluid hose to the housing of a gas pressure source,
- Fig. 8d: an intermediate step of the connecting of an extraction unit to the housing of a gas pressure source without fluid hose,
- Fig. 9: a partial view of the bottom side of the housing of the gas pressure source, and
- Fig. 10: a vertical section of the housing of the gas pressure source with a gas hose connected to it.

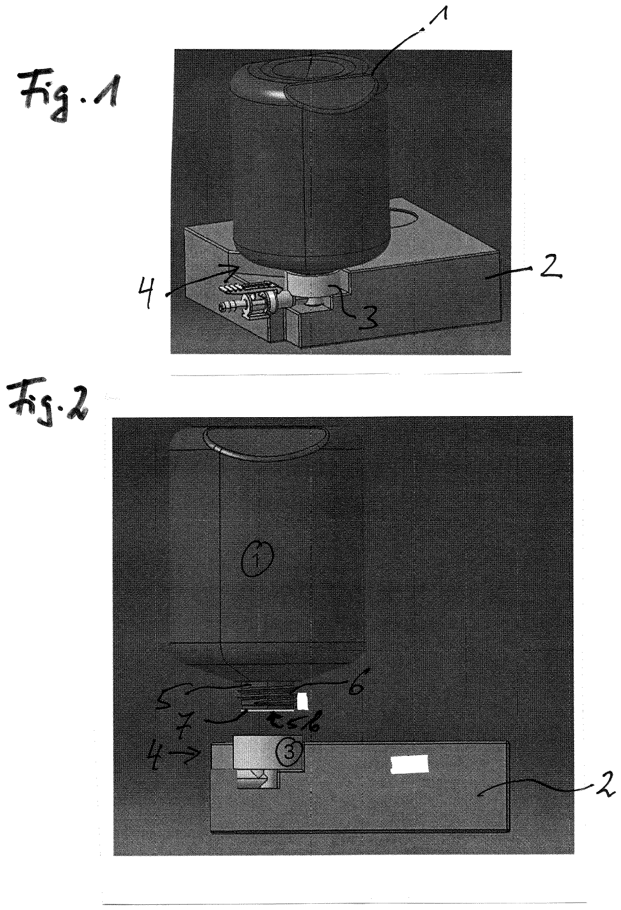

The system shown in Fig. 1 comprises a gas pressure tight sealant bottle 1, a gas pressure source (not shown) arranged in a housing 2 and an extraction unit 3 connected on the one hand to the sealant bottle 1 and on the other hand to the housing 2 of the gas pressure source. The housing 2 of the gas pressure source has a flat cuboid shape. In a corner region it has a cutout 4 where the extraction unit 3 is placed.

In Fig. 2 it can be seen that the sealant bottle 1 comprises a neck part 5 provided with a thread 6 on its outer periphery. The neck part 5 comprises an outlet opening (not shown) sealed with a sealant foil 7. The sealant bottle 1 is thus positioned in an upside down orientation, but no contents of the sealant bottle can flow out of it due to the sealant foil 7.

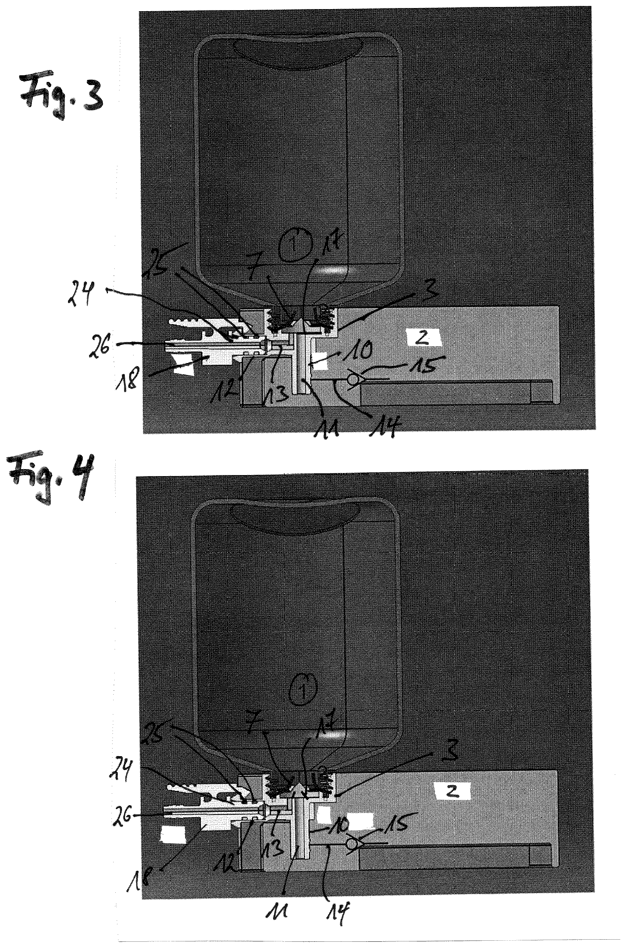

In the sectional depiction of Fig. 3 it can be seen that the thread 6 on the outer periphery of the neck part 5 of sealant bottle 1 has a counterpart in the extraction unit. Namely, extraction unit 3 comprises a socket 8 for receiving the neck part 5 of sealant bottle 1 which socket has on its periphery a thread 9 into which the thread on the outer periphery of the neck part of the sealant bottle can be screwed in.

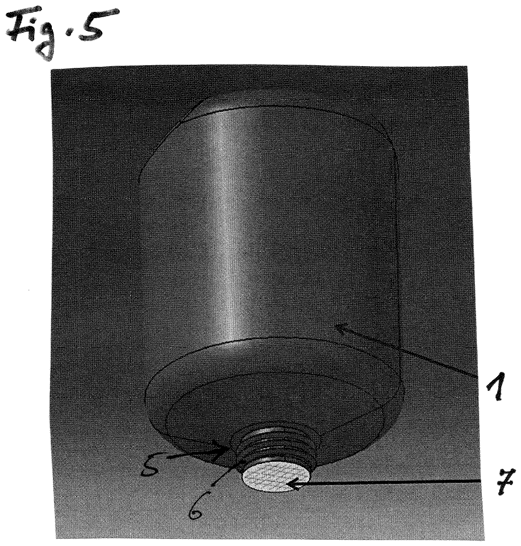

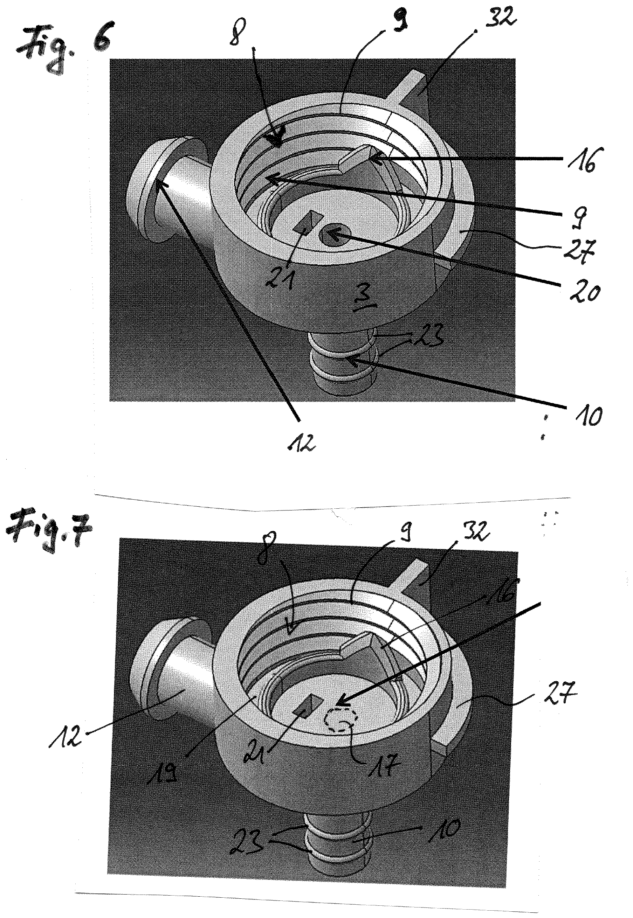

Socket 8 and inner thread 9 can more clearly be seen in Figs. 6 and 7. In Fig. 3 it can further be seen that the extraction unit 3 comprises an inlet plug 10 having a conduit 11 and an outlet plug 12 having a conduit 13. Conduit 11 of inlet plug 10 is connected to an outlet conduit 14 of the gas pressure source (not shown) arranged in housing 2. Within outlet conduit 14 a non-return valve 15 is arranged which prevents sealant flowing from sealant bottle 1 into the upstream part of outlet conduit 14 of the gas pressure source. This can also be seen in Fig. 4. The sealant bottle 1 having a foil sealing its outlet opening 5b in the neck part 5 can also be seen clearly in Fig. 5.

In Figs. 6 and 7 the details of the extraction unit 3 can be seen. As stated before, extraction unit 3 comprises a socket 8 for receiving the neck part 5 of sealant bottle 1. The receiving socket 8 is provided with a thread 9 on its inner periphery into which the thread 6 on the outer periphery of the neck part 5 of the sealant bottle 1 can be screwed. Within receiving socket 8 there is arranged a cutting edge 16 by which sealing foil 7 is cut open when sealant bottle 1 is screwed with its neck part 5 into the receiving socket 8 of the extraction unit 3. Fig. 3 shows sealant bottle 1 completely screwed into the receiving socket 8 of extraction unit 3. The sealing foil 7 is cut open so that pressurized gas provided by the gas pressure source can flow from outlet conduit 14 through conduit 11 of extraction unit 3 and into sealant bottle 1. As can be seen in Fig. 3 and more clearly in Fig. 7, conduit 11 of extraction unit 3 is initially sealed with a sealing foil 17. By applying gas pressure from the gas pressure source said sealing foil 17 is broken or released as shown in Fig. 4. Gas from the gas pressure source can thus enter the inside of sealant bottle 1 and expel liquid sealant contained in sealant bottle 1. The expelled sealant flows through outlet conduit 13 of outlet plug 12 of the extraction unit. From the outlet plug 12 the liquid sealant can be further conveyed into an inflatable object via a further conduit or hose. Figs. 3 and 4 show a connector 18 for connecting the outlet plug 12 to such hose (not shown).

In Figs. 6 and 7 it can further be seen that receiving socket 8 comprises a bottom 19 closing socket 8 on its lower side except for an inlet opening 20 having a circular shape and connected to inlet conduit 11 as well as an outlet opening 21 having a rectangular shape and being connected to outlet conduit 13. In the state where sealant bottle 1 is screwed into receiving socket 8 by its neck part 5, bottom 19 is opposite to a ring-shaped front face 22 of neck part 5 of sealant bottle 1. When sealant bottle 1 is screwed completely into socket 8 of extraction unit 3, ring-shaped front face 22 abuts bottom 19 of receiving socket 8. At least the ring-shaped part of bottom 19 is made of a material having sealing properties so that the abutment of the front face of neck part 5 of the sealant bottle 1 with bottom 19 prevents leakage of sealant during use of the system.

As shown in Figs. 3 and 4 inlet plug 10 of extraction unit 3 is inserted into outer conduit 14 of the gas pressure source. Inlet plug 10 comprises on its outer periphery two ring-shaped ribs 23 which are in contact with the inner wall of outlet conduit 14. If the extraction unit 3 is completely made of a material having sealing properties, these ring-shaped ribs 23 provide for a sealing of the extraction unit 3 against outlet conduit 14. No separate sealing elements like O-rings are thus needed for sealing the connection between conduit 11 and conduit 14.

Figs. 3 and 4 show that connector 18 comprises a plug-shaped end 24 which can be inserted into outlet conduit 13 of extraction unit 3. Plug-shaped end 24 is provided on its outer periphery with two O-rings 25 for sealing connector 18 against outlet plug 12. Connector 18 comprises a conduit 26 for conveying sealant expelled out of sealant bottle 1 via a hose (not shown) into an inflatable object.

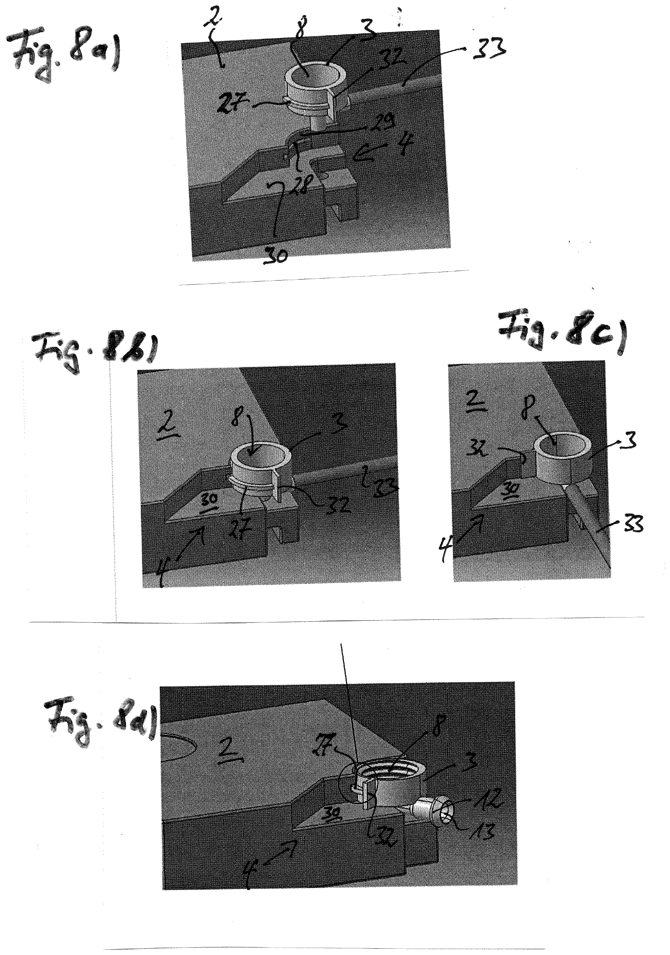

Figs. 8a to d show how extraction unit 3 can be coupled to housing 2 of the gas pressure source. Extraction unit 3 is provided with a rib 27 on its outer periphery extending approximately circumferentially over one fourth of the extraction unit 3. Housing 2 of the gas pressure source comprises a corresponding recess 28 in the corner region 4 for receiving rib 27. Corner region 4 is provided with a partially circular wall 29 in which said recess or groove is provided. Corner region 4 is further provided with a platform 30 on which extraction unit 3 can be placed and slideably turned around a vertical axis so as to insert rib 27 in recess 28. In the same corner region 4 the outlet conduit 14 of the gas pressure source has an opening 31 for inserting inlet plug 10 of extraction unit 3. The extraction unit can thereby be at the same time connected mechanically via rib 27 and recess 28 to housing 2 and fluidically via inlet plug 10 and opening 31 to the gas pressure source.

Extraction unit 3 is further provided with a handle 32 for turning extraction unit 3 on platform 30 around a vertical axis. Figs 8a shows a state where extraction unit 3 is not yet placed on the platform 30, whereas Fig. 8b shows extraction unit 3 placed on said platform 30. Fig. 8c shows the state were extraction unit 3 has been turned slideably on platform 30 such that rib 27 enters recess 28 and stably connects connection unit 3 to housing 2 of the gas pressure source. Fig. 8d shows an intermediate state where the extraction unit 3 is not yet completely turned and rib 27 has not yet completely entered recess 28. In Figs. 8a to 8c extraction 3 is shown with a hose 33 for connecting the extraction unit and an object to be sealed, whereas in Fig. 8d such hose is not shown.

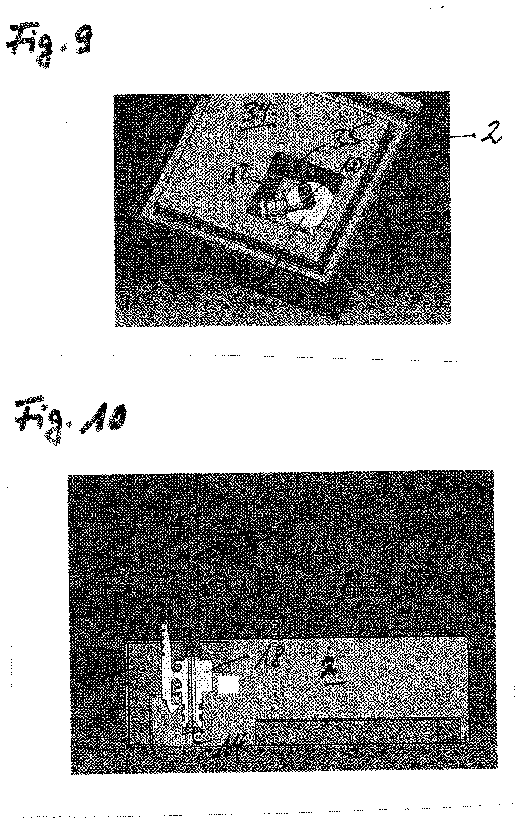

Fig. 9 shows the bottom side 34 of housing 2 of the gas pressure source. Bottom side 34 of housing 2 is provided with a compartment 35 for receiving extraction unit 3 when not in use.

Fig. 10 shows the system when used for inflating the inflatable article. Hose 35 with connector 18 is inserted for this purpose into outlet conduit 14 of the gas pressure source. The outlet conduit 14 has the same shape and size as the outlet plug of extraction unit 3 so that the same connector 18 can be used for connecting to the extraction unit 3 and to the outlet conduit 14 of the gas pressure source.

As clearly results from the description the inventive system consists of less parts than known systems and provides for easy handling of the sealing of an inflatable article.

### Reference numeral list

- 1: sealant bottle
- 2: housing of gas pressure source
- 3: extraction unit
- 4: corner region
- 5: neck part of 1
- 5b: opening of 1
- 6: outer thread
- 7: sealing foil
- 8: receiving socket
- 9: inner thread
- 10: inlet plug
- 11: inlet conduit
- 12: outlet plug
- 13: outlet conduit
- 14: outlet conduit
- 15: non-return valve
- 16: cutting edge
- 17: sealing foil
- 18: connector
- 19: bottom of 3
- 20: inlet opening
- 21: outlet opening
- 22: front face of 5
- 23: peripheral rib
- 24: end of 18
- 25: O-ring
- 26: conduit
- 27: rib
- 28: recess
- 29: wall
- 30: platform
- 31: opening
- 32: handle
- 33: hose
- 34: bottom side of 2
- 35: compartment

## Claims

1. Apparatus for conveying fluidical sealant into an inflatable object, in particular a pneumatic tire comprising (a) a sealant bottle (1) being gas pressure resistant and having a neck (5) provided with an outlet opening (5b) and an outer thread (6) and (b) an extraction unit (3) having a receiving socket (8) being provided with an inner thread (9) of reciprocal shape as compared to the outer thread of bottle neck (5), a gas inlet opening (20) and an outlet opening (21) for the liquid sealant, the inlet opening (20) and the outlet opening (21) being in fluid connection with the receiving socket, where bottle neck (5) of the sealant bottle (1) comprises a ring-shaped front face (22) surrounding opening (5a) and wherein receiving socket (8) of extraction unit (3) comprises a bottom (19) covering the ring-shaped front face (22) of bottle neck (5) in the state where bottle neck (5) is screwed into the receiving socket (8),
**characterized in that**
bottom (19) covering the ring-shaped front face (22) of bottler neck (5) and/or neck (5) of sealant bottle (1) are made of a material which guarantees leakage-free sealing of neck (5) of sealant bottle (1) against receiving socket (8) of extraction unit (3) when the neck (5) of sealant bottle (1) is screwed into the receiving socket (8) of extraction unit (3).

2. Apparatus according to claim 1,
**characterized in that**
a thermoplastic elastomer is used as material for leakage-free sealing.

3. Apparatus according to claim 2,
**characterized in that**
the thermoplastic elastomer has a Shore D hardness of 60, in particular 60 ± 10, preferably 60 ± 5.

4. Apparatus according to one of the preceding claims,
**characterized in that**
the complete extraction unit (3) is made of a material guaranteeing a leakage-free sealing.

5. Apparatus according to one of the preceding claims,
**characterized in that**
sealant bottle (1) is made of plastic, in particular of high density polyethylene.

6. Apparatus according to one of the preceding claims,
**characterized in that**
the gas inlet of extraction unit (3) is provided by an inlet plug (10) comprising an inlet conduit (11) which is in fluid connection with receiving socket (8) of extraction unit (3).

7. Apparatus according to claim 6,
**characterized in that**
inlet opening (20) of extraction unit (3) is closed by a sealing foil (17) which is breakable or releasable by the gas pressure provided by the gas pressure source.

8. Apparatus according to one of the preceding claims,
**characterized in that**
the outlet of extraction unit (3) is provided in an outlet plug (12) having an outlet conduit (13) being in fluidical connection with receiving socket (8) of extraction unit (3).

9. Apparatus according to claim 8,
**characterized in that**
the inlet plug (10) of the extraction unit (3) is provided on its outside with at least one circumferential rib (23).

10. Apparatus according to claim 8 or 9,
**characterized in that**
outlet plug (12) of extraction unit (3) is provided with coupling means for coupling the extraction unit (3) to a conduit, in particular a hose for conveying the sealant to an inflatable object.

11. Apparatus according to one of the preceding claims,
**characterized in that**
opening (5a) of sealant bottle (1) is closed by a sealing foil (22) when the sealing bottle (1) is not yet screwed into receiving socket (8).

12. Apparatus according to claim 11,
**characterized in that**
the extraction unit (3) is provided with means for severing the sealing foil (22) of sealant bottle (1), in particular a cutting edge (16) arranged in the receiving socket (8) of extraction unit (3).

13. System for conveying fluidical sealant into an inflatable object, in particular a pneumatic tire, comprising an apparatus according to one of the preceding claims and a gas pressure source arranged in a housing (2), in particular an electrically driven air pump,
**characterized in that**
the extraction unit (3) is arranged at an outer side of housing (2) or can be coupled to an outer side of housing (2).

14. System according to claim 13,
**characterized in that**
housing (2) comprises a receiving section (4) for receiving extraction unit (3), in which receiving section outlet conduit (14) opens and in which extraction unit is placeable such that the inlet of extraction unit (3) is connectable to outlet conduit (14) of the gas pressure source, in particular directly plugable into it.

15. System according to claim 14,
**characterized in that**
the receiving section (4) on the one side and the extraction unit (3) on the other side have reciprocal parts of a bayonet-like coupling, in particular on the one side a rib (27) and on the other side a recess (28).

16. System according to claim 15,
**characterized in that**
the extraction unit (3) comprises a handle (32) for manually turning extraction unit (3) around a vertical axis relative to the receiving section (4) of housing (2) and for making the bayonet-like coupling.

17. System according to claim 15 or 16,
**characterized in that**
the receiving section (4) of housing (2) comprises a platform (30) on which the extraction unit (3) is placeable and slideably turnable around a vertical axis for making the bayonet-like coupling.

18. System according to one of claims 14 to 17,
**characterized in that**
the receiving section (4) is arranged in an edge area, in particular a corner area, of housing (2) of the gas pressure source.

19. System according to one of claims 13 to 18,
**characterized in that**,
the housing (2) of the gas pressure source comprises a receiving compartment (35), which is in particular accessible from outside, for storing extraction unit (3) when not in use.

20. System according to one of claims 13 to 19,
**characterized in that**
a non-return valve (15) is provided in housing (2) of the gas pressure source, which valve (15) is arranged in the outlet conduit (14) of the gas pressure source and closes the outlet conduit (14) against an inflow of sealant when the sealant bottle (1) is connected to the gas pressure source.
